# EUROPÄISCHE PATENTSCHRIFT

(11) **EP 3 458 296 B1**
(45) Veröffentlichungstag und Bekanntmachung des Hinweises auf die Patenterteilung: **30.12.2020**
(21) Anmeldenummer: 17723987.8
(22) Anmeldetag: 15.05.2017
(51) Int. Cl.: B60K 7/00

(54) **RAD MIT ANTRIEBSEINHEIT FÜR EIN FAHRZEUG, VERFAHREN ZUR MONTAGE EINES RADES UND DICHTUNGSEINRICHTUNG ZUR ABDICHTUNG EINER LAGEREINRICHTUNG EINES RADES**
WHEEL WITH DRIVE UNIT FOR A VEHICLE, METHOD FOR MOUNTING A WHEEL, AND SEALING DEVICE FOR SEALING A BEARING DEVICE OF A WHEEL
ROUE MUNIE D'UNE UNITÉ D'ENTRAÎNEMENT POUR UN VÉHICULE, PROCÉDÉ DE MONTAGE D'UNE ROUE ET DISPOSITIF D'ÉTANCHÉITÉ POUR RENDRE UN ROULEMENT DE ROUE ÉTANCHE

(30) Priorität: 19.05.2016 DE 102016109221
(43) Veröffentlichungstag der Anmeldung: 27.03.2019
(73) Patentinhaber: UJET S.A., 3364 Leudelange (LU)
(72) Erfinder: DAVID, Patrick, 89134 Blaustein (DE); SPEIDEL, Timo, 89081 Ulm-Jungingen (DE)
(74) Vertreter: Würmser, Julian
(86) Internationale Anmeldenummer: PCT/EP2017/061570
(87) Internationale Veröffentlichungsnummer: WO 2017/198592

(56) Entgegenhaltungen:
- WO-A2-2015/092743
- DE-T5-112009 003 757
- JP-A- 2003 300 420

## Beschreibung

Die Erfindung betrifft ein Rad mit Antriebseinheit für ein Fahrzeug, insbesondere für einen Motorroller, sowie ein Verfahren zur Montage eines Rades mit einem Antrieb und eine Dichtungseinrichtung zum Abdichten einer Lagereinrichtung eines Rades.

Mit elektrischen Antrieben ausgestattete Motorroller sind bekannt. Elektrisch angetriebene Motorroller werden üblicherweise durch einen Elektromotor angetrieben, der unterhalb des Fahrersitzes angeordnet ist und das Hinterrad über einen Riemen oder eine Kette antreibt.

Es sind ferner Nabenmotoren bekannt, die bei Elektrofahrrädern oder Pedelecs eingesetzt werden. Dabei sitzt der Motor zentrisch gelagert am Vorder- oder Hinterrad, so dass das Rad über eine zentrisch angeordnete Welle angetrieben wird.

Ein Nachteil von traditionellen Radnabenmotoren ist, dass diese aufgrund ihrer Bauweise ein relativ geringes Drehmoment auf das Rad übertragen. Darüber hinaus führen Nabenmotoren zu einem hohen Gewicht des Rades, was wiederrum zu einem vom Fahrer unangenehm empfundenen Fahrgefühl führt.

Die DE 10 2011 111 352 B4 beschreibt einen Elektromotor, der als Außenläufer mit eisenloser Wicklung konzipiert ist. Durch den Verzicht auf Eisen zwischen den Leitern des Elektromotors, wird das Gewicht reduziert.

Aus der DE 11 2009 003 757 T5 ist ein Antrieb bekannt, bei dem das Wechseln eines Rades vereinfacht werden soll. Dabei ist ein Innengehäuse relativ zu der Fahrzeugkarosserie drehfest angeordnet. Zusätzlich ist ein elektrischer Motor vorgesehen, der aus einem außenlaufenden Rotor und einem Stator aufgebaut ist.

Ausgehend von diesem Stand der Technik, ist es Aufgabe der vorliegenden Erfindung, ein Rad mit einer Antriebseinheit für ein Fahrzeug bereitzustellen, das eine azentrische Aufhängung bereitstellt und ein hohes Drehmoment bei einem geringen Gesamtgewicht überträgt.

Die Aufgabe wird gelöst durch ein Rad mit Antriebseinheit für ein Fahrzeug nach Anspruch 1 und ein Verfahren nach Anspruch 15.

Insbesondere wird die Aufgabe gelöst durch ein Rad, wobei das Rad Folgendes aufweist:
- einen als Stator ausgebildeten Innenring, der mit einer Radaufhängung des Rades verbunden ist;
- einen als Rotor ausgebildeten Felgenring mit einer Rotationsachse, wobei der Felgenring außen um den Innenring herumläuft und die Rotationsachse und die Halterungsachse zumindest im Wesentlichen parallel zueinander verlaufen, wobei die Radaufhängung azentrisch von der Rotationsachse beabstandet angeordnet ist.

Das Rad besteht also im Wesentlichen aus einem Felgenring, an dem der Reifen angebracht werden kann und einem Innenring. Der Felgenring und der Innenring bilden zusammen einem Elektromotor. Das beschriebene Rad bildet also selbst eine Antriebseinheit für ein Fahrzeug. Dabei wirkt der Felgenring als Rotor und der Innenring als Stator. Durch diese Anordnung ist es möglich auf eine üblicherweise vorhandene, zentrisch angeordnete Nabe zu verzichten. Das Rad wird also Leichter.

Es ist ferner durch diese Anordnung möglich, dass die Radaufhängung azentrisch von der Rotationsachse des Felgenringes beabstandet angeordnet ist. Eine azentrische Anordnung der Radaufhängung kann z.B. aus ästhetischen Gründen gewünscht sein. Es wird aber auch ermöglicht, auf normalerweise vorhandene Speichen weitgehend zu verzichten. Es muss lediglich sichergestellt werde, dass der Innenring über die Radaufhängung fest mit einer Lenkeinheit des Fahrzeugs verbunden ist. Es wird also erneut Gewicht eingespart.

In einer Ausführungsform kann eine zur drehbaren Lagerung des Felgenrings ausgebildete Lagereinrichtung vorgesehen sein, wobei die Lagereinrichtung am Innenring und am Felgenring angeordnet ist. Bei der Lagereinrichtung kann es sich um Wälzlager oder auch um ein Magnetlager handeln.

Zur drehbaren Lagerung des Felgenrings kann eine Lagereinrichtung vorgesehen sein. Insbesondere die Verwendung von Wälz- oder Magnetlagern hat den Vorteil, dass nur eine geringe Reibung zwischen Innenring und Felgenring entsteht.

In einer Ausführungsform kann die Lagereinrichtung zumindest ein erstes und ein zweites Lager umfassen, wobei das erste und das zweite Lager sich gegenüberliegend wechselseitig an dem Innenring und/oder an dem Felgenring angeordnet sind.

Durch das Verwenden von zwei Lagern, zum Beispiel durch zwei Wälzlager, kann eine gleichmäßige Kraftübertragung zwischen Innenring und Felgenring gewährleistet werden. Es ist ferner möglich, zwei kleine Lager zu verwenden, so dass eine kompakte Bauweise des Rades ermöglicht wird.

In einer Ausführungsform kann an der Lagereinrichtung eine Dichtungseinrichtung vorgesehen sein.

Wenn die Lagereinrichtung an den Außenseiten des Innenrings und des Felgenrings angeordnet ist, so ist es von Vorteil, wenn die Lagereinrichtung vor Umwelteinflüssen wie Schmutz oder Wasser geschützt wird. Dazu kann eine Dichtungseinrichtung vorgesehen sein. Die Lebensdauer des Rades wird durch die Dichtungseinrichtung erhöht.

In einer Ausführungsform kann die Dichtungseinrichtung dazu ausgebildet sein, die Lagereinrichtung im Stillstand des Felgenrings abzudichten und die Lagereinrichtung beim Umdrehen des Felgenrings freizugeben.

Wenn eine Dichtungseinrichtung an der Lagereinrichtung vorgesehen ist, kann es im Betrieb des Rades zu Reibung zwischen der Dichtungseinrichtung und dem sich bewegendem Lager kommen. Es ist daher vorteilhaft, wenn die Dichtungseinrichtung dazu ausgebildet ist, die Lagereinrichtung beim Umdrehen des Felgenrings freizugeben. Freigeben der Lagereinrichtung kann in diesem Zusammenhang bedeuten, dass im freigegeben Zustand kein Kontakt zwischen zumindest einem Teil der Lagereinrichtung und der Dichtungseinrichtung vorliegt. Dadurch wird insbesondere die Dichtungseinrichtung geschont. Ferner wird die Reibung reduziert und die Effizienz des Rades erhöht.

In einer Ausführungsform kann die Dichtungseinrichtung dazu ausgebildet sein, die Lagereinrichtung in Abhängigkeit von an dem Felgenring wirkenden Zentripetalkräften freizugeben.

In der beschriebenen Ausführungsform wird ausgenutzt, dass sich durch das Umdrehen des Felgenrings an diesem Zentripetalkräfte bilden, die verwendet werden können, um die Lagereinrichtung freizugeben. In der beschriebenen Ausführungsform werden somit keine zusätzlichen Vorrichtungen benötigt, um eine Freigabe der Lagereinrichtung zu gewährleisten.

In einer weiteren Ausführungsform kann die Dichtungseinrichtung dazu ausgebildet sein, die Lagereinrichtung in Abhängigkeit von durch das Umdrehen des Felgenrings erzeugten Luftdruckänderungen freizugeben.

Es ist also auch möglich, dass Luftdruck verwendet wird, um die Lagereinrichtung freizugeben. Zum Beispiel kann ein bei der Fahrt eines Fahrzeugs erzeugter Fahrtwind so kanalisiert werden, dass die Dichtungseinrichtung die Lagereinrichtung freigibt. Es wird also eine sehr effiziente Möglichkeit bereitgestellt, den vorhandenen Fahrtwind zu nutzen, um eine Freigabe der Lagereinrichtung zu bewirken.

In einer weiteren Ausführungsform kann die Dichtungseinrichtung dazu ausgebildet sein, die Lagereinrichtung in Abhängigkeit von an der Dichtungseinrichtung wirkenden Magnetkräften freizugeben.

Eine weitere Möglichkeit zur Freigabe der Lagereinrichtung ist die Verwendung von Magnetkräften. Z.B. könnte an der Dichtungseinrichtung ein Elektromagnet angeordnet sein, der die Dichtungseinrichtung von der Lagereinrichtung auf Distanz hält. Dabei ist von Vorteil, dass Elektromagnete beliebig geschaltet werden können und somit unabhängig von dem Zustand des Fahrzeugs ein oder ausgeschaltet werden können.

In einer Ausführungsform kann an der Innenseite des Innenrings eine Vielzahl von Querrippen vorgesehen sein, die zumindest im Wesentlichen parallel zur Rotationsachse angeordnet sind.

Die Querrippen erhöhen die Stabilität des Innenrings, da sie zu einer Versteifung des Innenrings führen. Die Querrippen dienen insbesondere zur Aufnahme von Kräften, die in Richtung des Mittelpunktes des Rades wirken. Das sind insbesondere die normalen Fahrtkräfte, die von der Fahrbahn auf das Rad wirken.

Ferner können die Querrippen verwendet werden, um eine Kühlung des Stators bereitzustellen. Die Querrippen können also eine Doppelfunktion einnehmen, einerseits als Stabilitätsmittel und andererseits als Kühlmittel. Dadurch ist eine sehr hohe Effizienz der eingesetzten Mittel gewährleistet. In einer Ausführungsform sind die Querrippen aus einem wärmeleitenden Material gefertigt.

In einer Ausführungsform kann an der Innenseite des Innenrings zumindest eine Längsrippe vorgesehen sein, die den Innenring innen umläuft und zumindest im Wesentlichen senkrecht zur Rotationsachse angeordnet ist.

Eine innen im Innenring verlaufende Längsrippe kann zu einer weiteren Versteifung des Innenrings führen. Über die Längsrippe werden insbesondere Seitenkräfte aufgenommen, die z.B. bei einer Schräglage des Rades oder bei sonstigen Stößen von der Seite auftreten. Zusätzlich zu den Vorteilen einer erhöhten Steifigkeit des Innenrings kann eine Längsrippe zu einer Verbesserung der aerodynamischen Eigenschaften des Rades führen, da das Durchströmen des Rades mit Seitenwinden kontrolliert werden kann.

Es ist vorgesehen, dass an einer Außenseite des Innenrings eine Vielzahl an Wicklungssträngen angeordnet ist und es ist an der Innenseite des Felgenrings zu jedem Wicklungsstrang gegenüberliegend jeweils eine Magneteinrichtung angeordnet, wobei die Magneteinrichtungen mit alternierenden Polungen angeordnet sind.

Die Wicklungsstränge können so angeordnet sein, dass die Wicklungsstränge im Betrieb im Wesentlichen parallel zur Rotationsachse des Felgenringes mit Strom durchflossen werden. Die Wicklungsstränge können also mäanderförmig angeordnet sein auf der Außenseite des Innenrings angeordnet sein.

Die Magneteinrichtungen können so angeordnet sein, dass jeweils ein Pol einer Magneteinrichtung in Richtung des Mittelpunkts des Felgenringes zeigt und der zweite Pol der Magneteinrichtung nach außen, von dem Mittelpunkt des Felgenringes weg zeigt. Somit tritt das Magnetfeld einer Magneteinrichtung im Wesentlichen senkrecht aus dem Felgenring heraus, so dass bei einem Stromfluss durch die Wicklungsstränge eine Kraft zum Antrieb des Rades erzeugt wird. Diese, auch Lorenzkraft genannte Kraft, wird durch die bekannte Wechselwirkung von elektrisch durchflossenen Leitern und Magnetfeldern hervorgerufen.

Da die Wicklungsstränge nur an der Außenseite des Innenrings angeordnet sind, wechselt die Richtung des Stromes bei einer Draufsicht bei jedem Wicklungsstrang. Wenn die Magneteinrichtungen mit alternierenden Polungen angeordnet sind, ist gewährleistet, dass immer eine Magneteinrichtung entsprechend zu der Strömungsrichtung des gegenüberliegenden Wicklungsstrangs angeordnet ist.

Ein Wicklungsstrang umfasst jeweils drei mäanderförmig angeordnete Leiterbahnen, wobei zwischen den Leiterbahnen jeweils eine Isolationseinrichtung angeordnet ist.

Das Verwenden von drei Leiterbahnen hat den Vorteil, dass deren Stromrichtung einzeln gesteuert werden kann. Bei dem Umdrehen des Felgenringes ist es von Vorteil, wenn die Stromrichtung einer Leiterbahn immer entsprechend der gegenüberliegenden Magneteinrichtung gesteuert wird, sodass immer alle Leiterbahnen bei der Krafterzeugung mitwirken.

Die Isolationseinrichtungen können thermoplastisch aufgespritzt und/oder duroplastisch aufgespritzt werden.

Die Isolationseinrichtungen können also einerseits die notwendige Isolierung zwischen den Leiterbahnen gewährleisten und andererseits den festen Halt der Leiterbahnen an dem Innenring sicherstellen.

In einer Ausführungsform können die Leiterbahnen auf der Außenseite des Innenrings aufgeklebt und/oder mit Folie aufgeklebt sein.

Ein Aufkleben der Leiterbahnen auf der Außenseite des Innenrings erlaubt eine einfache Herstellung mit einem geringen Aufwand.

In einer Ausführungsform können die Leiterbahnen flächig mit einer im Verhältnis zur Breite geringen Höhe ausgebildet sein. Insbesondere kann eine Höhe von 1/2, 1/5, 1/10, 1/15, 1/20 oder 1/50 der Breite der Leiterbahnen vorgesehen sein.

Wenn die Leiterbahnen flächig ausgebildet sind, wird eine einfache Herstellung ermöglicht, da die Leiterbahne einfach aus einem Stück Blech ausgestanzt oder z.B. per Laser ausgeschnitten werden können.

In einer Ausführungsform kann an der Radaufhängung eine Bremseinrichtung angeordnet sein, die dazu ausgebildet sein kann, bei einem Bremsvorgang von innen in eine mit dem Felgenring fest verbundene Bremsscheibe einzugreifen.

Um ein Bremsen des Rades zu ermöglichen, kann eine Scheibenbremse vorgesehen sein. Dabei ist es zur Erhöhung der Bremsleistung vorteilhaft, wenn eine Bremsscheibe mit großem Durchmesser verwendet wird. Dadurch, dass das Rad als ein Außenläufermotor ausgestaltet ist, ist es sehr einfach möglich, dass die Bremsscheibe an dem Felgenring befestigt wird und dass die Bremseinrichtung von innen in die Bremsscheibe eingreift. Die vorgeschlagene Bauweise ermöglicht also die Erhöhung der Bremsfähigkeit des Rades.

In einer Ausführungsform kann die Radaufhängung eine Federungseinrichtung aufweisen, wobei die Radaufhängung derart ausgestaltet sein kann, dass eine Rotation um die Halterungsachse stattfindet.

Durch das Verwenden einer Federungseinrichtung an der Radaufhängung kann die Federung bzw. Dämpfung des Rades leicht eingestellt werden.

Die Aufgabe wird ferner gelöst durch ein Verfahren zur Montage eines Rades, wie es vorstehend beschrieben wurde, Folgendes aufweisend:
- Anfertigen von Leiterbahnen aus einem Blech;
- Anbringen der Leiterbahnen an der Außenseite des Innenrings des Rades;
- Isolieren der Leiterbahnen.

Die Leiterbahnen können also aus einem Blech angefertigt werden, und dann an die Außenseite des Innenrings des Rades angebracht werden. Es wird also eine sehr einfache Möglichkeit bereitgestellt, die Leiterbahnen an dem Rad zu befestigen. Eine aufwändige Wicklung, wie es sonst bei Elektromotoren notwendig ist, entfällt.

In einer Ausführungsform kann das Anfertigen der Leiterbahnen ein Ausstanzen der Leiterbahnen aus einem Blech oder das Ausschneiden aus einem Blech umfassen. Das Ausschneiden könnte zum Beispiel per Laser ausgeführt werden. Die beschriebenen Möglichkeiten zum Anfertigen der Leiterbahnen ermöglichen eine hoch präzise und effiziente Herstellung, die darüber hinaus kostengünstig ist.

In einer Ausführungsform kann das Isolieren der Leiterbahnen ein thermoplastisches Umspritzen oder ein duroplastisches Umspritzen der Leiterbahnen umfassen.

Durch ein thermoplastisches oder duroplastisches Umspritzen wird eine sehr effiziente und einfache Möglichkeit geboten, die Leiterbahnen zu isolieren.

Ferner wird die Aufgabe gelöst durch eine Dichtungseinrichtung zum Abdichten einer Lagereinrichtung eines vorstehend beschriebenen Rades, wobei die Dichtungseinrichtung dazu ausgebildet ist,
- die Lagereinrichtung im Stillstand des Felgenrings abzudichten und
- die Lagereinrichtung beim Umdrehen des Felgenringes, insbesondere in Abhängigkeit von an dem Felgenring wirkenden Zentripetalkräften, freizugeben.

Es ergeben sich ähnliche oder identische Vorteile, wie sie bereits in Zusammenhang mit dem Rad beschrieben wurden.

Weitere vorteilhafte Ausgestaltungen der Erfindung ergeben sich anhand der Unteransprüche.

Nachfolgend wird die Erfindung mittels mehrerer Ausführungsbeispiele beschrieben, die anhand von Abbildungen näher erläutert werden. Hierbei zeigen:
- Figur 1: eine seitliche Gesamtansicht eines elektrischen Motorrollers 1;
- Figur 2: eine Detailansicht eines Innenrings 20;
- Figur 3: eine Detailansicht eines zu dem Innenring 20 der Figur 2 korrespondierenden Felgenrings 30;
- Figur 4: eine Schnittansicht des Felgenrings 30 und des Innenrings20;
- Figur 5: eine schematische Seitenansicht des Felgenrings 30 mit Magneteinrichtungen 34;
- Figur 6: eine schematische Darstellung der Leiterbahnen 28, 28', 28" und korrespondierenden Magneteinrichtungen 34;

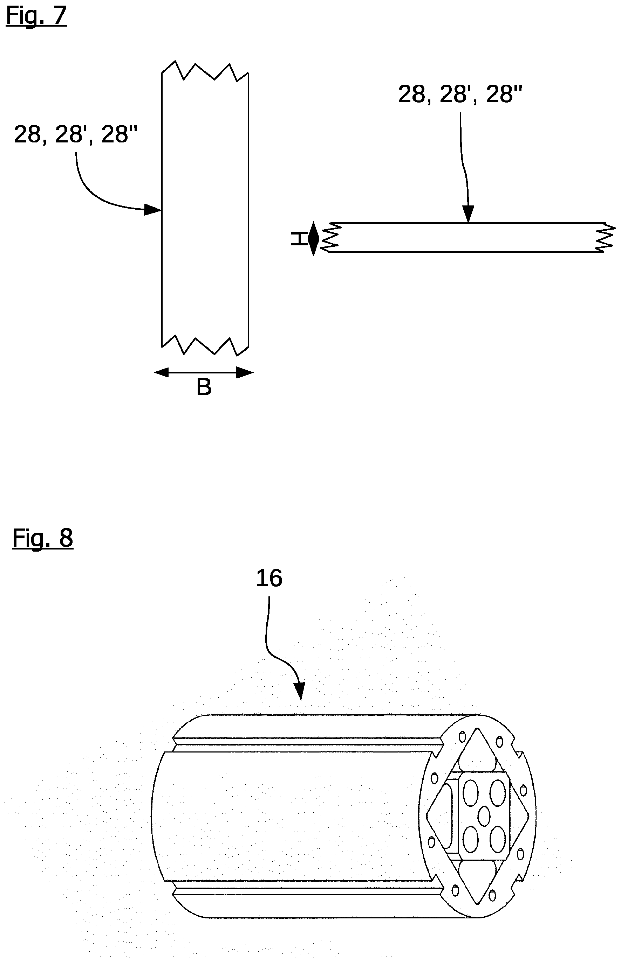

- Figur 7: eine schematische Darstellung einer einzelnen Leiterbahn 28;
- Figur 8: eine Darstellung einer Federungseinrichtung 16.

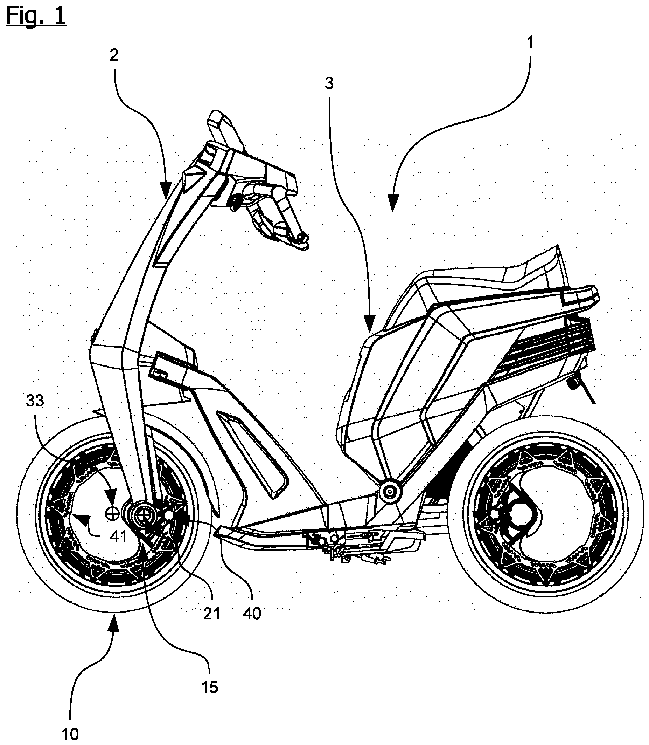

Figur 1 zeigt einen Motorroller 1 mit einem Vorderrad 10 und einem Hinterrad sowie Lenkeinheit 2 und Batteriekasten 3. Das Rad 10 ist über eine Radaufhängung 15 mit der Lenkeinheit 2 des Motorrollers 1 fest verbunden.

Durch die Radaufhängung 15 verläuft eine Halterungsachse 21, die im Wesentlichen parallel zu einer Rotationsachse 33 verläuft. Die Rotationsachse 33 verläuft durch den Mittelpunkt des Rades 10. Das Rad 10 ist also azentrisch mit der Lenkeinheit 2 verbunden.

Im Wesentlichen parallel bedeutet im Rahmen dieser Anmeldung, dass die im Wesentlichen parallelen Elemente im Rahmen von gewöhnlichen Fertigungstoleranzen parallel verlaufen.

Die azentrische Aufhängung des Rades 10 wird dadurch ermöglicht, dass das Rad 10 als Antrieb des Motorrollers 1 wirkt. Es wird also keine Nabe benötigt. Das Rad 10 ist als Elektromotor ausgebildet, wobei der Batteriekasten 3 elektrisch mit dem Rad 10 verbunden ist.

In einer Ausführungsform ist lediglich das Hinterrad als Antrieb ausgebildet und in einer anderen Ausführungsform ist lediglich das Vorderrad als Antrieb ausgebildet. In weiteren Ausführungsformen ist es durchaus möglich, dass das Vorder- sowie das Hinterrad als Antriebe ausgebildet sind.

Durch die nabenfreie und speichenlose Ausführung des Rades 10 wird das Gewicht des Rades 10 deutlich reduziert.

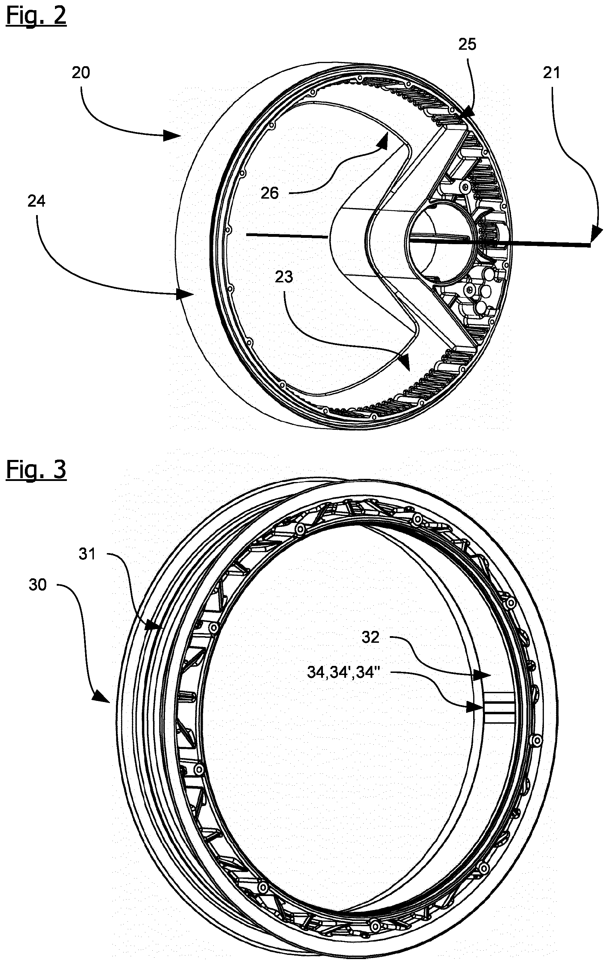

Die Figur 2 zeigt in perspektivischer Darstellung einen Innenring 20 des Rades 10. Durch den Innenring 20 verläuft die Halterungsachse 21, an der die Radaufhängung 15 zur Montage des Rades 10 an dem Motorroller 1 angeordnet ist. Um die Steifigkeit des Innenrings 20 zu erhöhen, sind Querrippen 25 und eine Längsrippe 26 an der Innenseite des Innenrings 23 vorgesehen. Die Quer- und Längsrippen 25, 26 sind in der dargestellten Ausführungsform integraler Bestandteil des Innenrings 20. In weiteren Ausführungsformen kann es sich aber auch um getrennte Teile handeln. Insbesondere um Teile aus einem anderen Material. Die Querrippen 25 sind in der dargestellten Ausführungsform hohl ausgestaltet, sodass das Gesamtgewicht des Rades 10 gering gehalten wird.

Der Innenring 20 ist als Stator eines Elektromotors ausgebildet. Hierzu sind an der Außenseite 24 des Innenrings 20 Wicklungsstränge 27 vorgesehen, die von einem Strom durchflossen werden. Durch die Wicklungsstränge 27 bewegen sich also elektrische Ladungsträger.

Figur 3 zeigt in einer perspektivischen Darstellung einen als Rotor eines Elektromotors ausgebildeten Felgenring 30. Der Felgenring 30 läuft im montierten Zustand außen um den Innenring 20 herum. An der Außenseite 31 des Felgenrings 31 wird i ein Reifen angebracht. An der Innenseite 32 des Felgenrings 30 sind Magneteinrichtungen 34, 34', 34" vorgesehen, die zum Beispiel als Permanentmagnete ausgebildet sein können. Die Magneteinrichtungen 34, 34', 34" sind in alternierender Polung angeordnet, so dass abwechselnd Nord, Süd und wieder Nord in Richtung des Zentrums des Innenrings 30 zeigen. Das von den Magneteinrichtungen 34, 34', 34" erzeugte Magnetfeld zeigt also im Wesentlichen senkrecht aus den Magneteinrichtungen 34, 34', 34" in das Zentrum des Innenrings 30. Wie bereits im Zusammenhang mit Figur 2 beschrieben, verlaufen an der Außenseite 24 des Innenrings 20 Wicklungsstränge 27. Durch die Wechselwirkung der stromdurchflossenen Wicklungsstränge 27 und der Magneteinrichtungen 34 ,34', 34" wird eine Lorentzkraft erzeuget, die zur Drehung des Felgenrings 30 führt.

Figur 3 zeigt eine Schnittansicht des Rades 10 mit Innenring 20 und Felgenring 30 im montierten Zustand. Der Felgenring 30 und der Innenring 20 sind über eine Lagereinrichtung 11 drehbeweglich miteinander verbunden. Die Lagereinrichtung 11 ist in der dargestellten Ausführungsform als ein erstes und zweites Wälzlager 13, 13' ausgebildet. Das erste und zweite Wälzlager 13, 13' sind jeweils gegenüberliegend an den Außenkanten des Innenrings 22, 22' und den Außenkanten 22, 22' des Felgenrings 30 angeordnet. Das Verwenden von zwei Wälzlagern 13, 13' ermöglicht eine kompakte Bauweise, da an den Außenkanten 22, 22' des Felgenrings 30 kleine Wälzlager verwendet werden können. Darüber hinaus wird eine gleichmäßige Kraftübertragung und geringer Materialverschleiß erreicht. Die Lagereinrichtung 11 kann in einer weiteren Ausführungsform auch als Magnetlager ausgeführt sein. Ein Magnetlager bietet den Vorteil, dass die Reibung und damit der Materialverschleiß weiter reduziert wird.

Dadurch, dass die Wälzlager 13, 13' an den Außenkanten 22, 22' des Felgenrings angeordnet sind, müssen die Wälzlager 13, 13' vor äußeren Umwelteinflüssen geschützt werden. Insbesondere das Eintreten von Schmutz oder Wasser muss wirksam verhindert werden. In der dargestellten Ausführungsform sind zu diesem Zweck Dichtungseinrichtungen 14, 14' vorgesehen, die die Wälzlager 13, 13' schützen. Die Dichtungseinrichtung 14, 14' wird aus einem Dichtungskörper 17 und einer Dichtlippe 18 gebildet. Der Dichtungskörper 17 ist in der dargestellten Ausführungsform am Innenring 20 befestigt. Die Dichtlippe 18 ist von außen um die Wälzlager 13, 13' herumgeführt. In der dargestellten Ausführungsform der Figur 3 wird also einerseits durch den Dichtungskörper 17 verhindert, dass Schmutz oder Wasser in den Innenbereich des Innenrings 20 eindringen kann und die Dichtlippe 18 verhindert, dass Schmutz oder Wasser in eines der Wälzlager 13, 13' eindringen kann.

Der Schutz vor Umwelteinflüssen durch die Dichtungseinrichtung 14, 14' ist insbesondere im Stand notwendig. Während des Fahrens, also dem Drehen des Felgenrings 30 um den Innenring 20, ist die Gefahr von eintretendem Schmutz geringer, da Wasser bzw. Schmutz durch das Rad 10 verdrängt wird. In einer weiteren Ausführungsform ist zu diesem Zweck die Dichtungseinrichtung 14, 14' an dem Felgenring 30 befestig, so dass die Dichtlippe 18 mit dem Felgenring 30 dreht. Dadurch kann es zur Reibung zwischen der Dichtlippe 18 und dem Wälzlager 13, 13' kommen. Zur Verhinderung der Reibung kann die durch das Drehen des Felgenrings 30 erzeugte Zentripetalkraft FZ verwendet werden. Insbesondere kann die Zentripetalkraft FZ verwendet werden, um die Dichtlippe 18 von dem Lager 13, 13' wegzuführen, so dass keine Reibung zwischen Wälzlager 13, 13' und Dichtlippe 18 auftritt.

Wie bereits oben dargestellt sind zur Bereitstellung des elektrischen Antriebs an dem Felgenring 30 Magneteinrichtungen 34 sowie dazu gegenüberliegend Wicklungsstränge 27 am Innenring angeordnet. Zwischen den Wicklungssträngen 27 und den Magneteinrichtungen 34 ist ein kleiner Luftspalt vorgesehen. Auf der Rückseite der Wicklungsstränge 27 (Seite zum Mittelpunkt des Innenrings) sowie an der Rückseite der Magneteinrichtungen 34 (Seite nach außen) sind Stahlrücken 35, 35' vorgesehen.

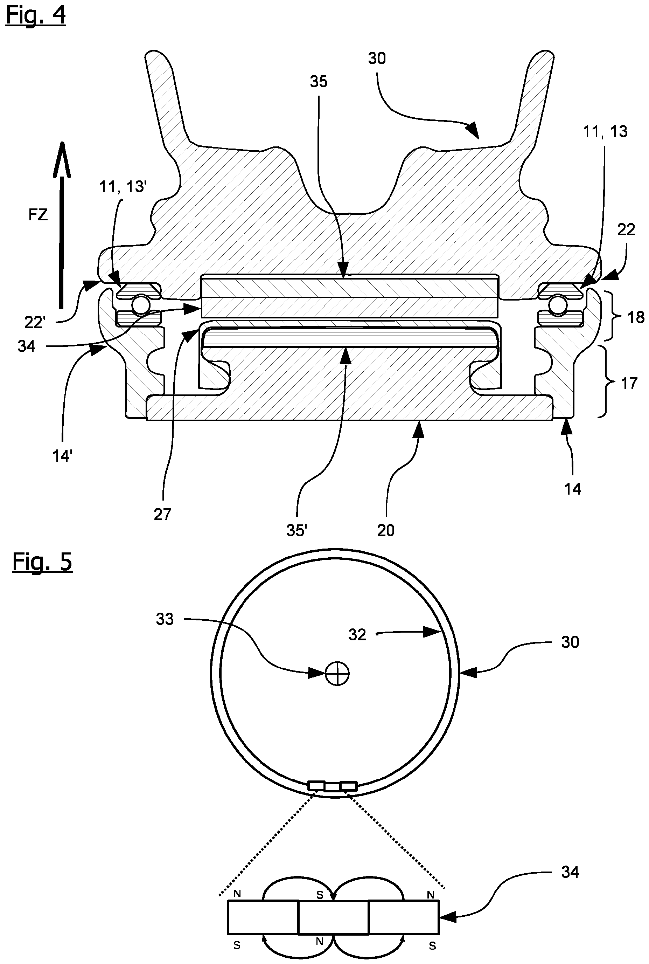

Wie in Figur 5 gezeigt, wirken die Magnetfelder der Magneteinrichtung 34 in Richtung der Rotationsachse des Felgenrings 33. Eine möglichst senkrechte Ausleitung der Magnetfeldlinien aus den Magneteinrichtungen 34, 34', 34" führt zu einer Maximierung der erzeugten Lorenzkraft. Die Magneteinrichtungen 34, 34', 34" sind zu diesem Zweck so ausgebildet, dass ein magnetischer Pol jeweils zu der Rotationsachse 33 hinzeigt.

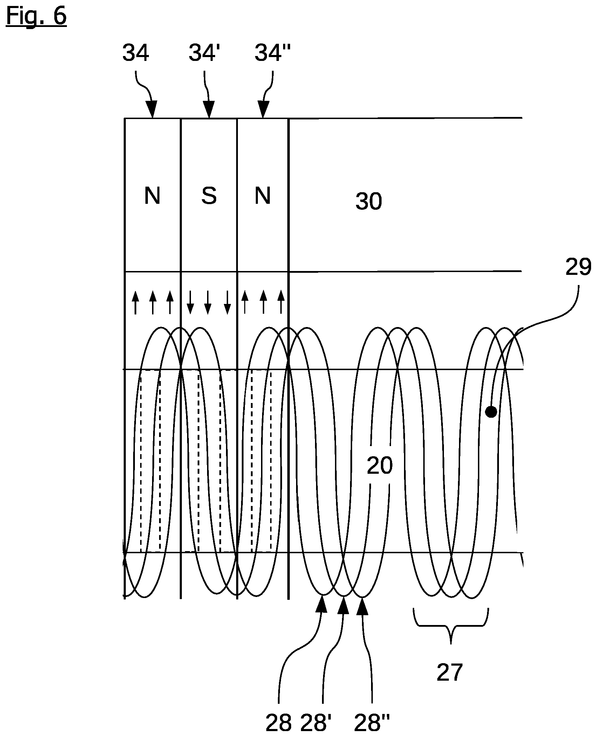

Das Zusammenwirken der Magneteinrichtungen 34, 34', 34" sowie der Wicklungsstränge 27 ist in Figur 6 schematisch dargestellt. Figur 6 zeigt im oberen Bereich die Anordnung der Magneteinrichtungen 34, 34', 34" an der Innenseite 32 des Felgenrings 30. Im unteren Bereich der Figur 6 wird die Anordnung der Wicklungsstränge 27 an der Außenseite 24 des Innenrings 20 dargestellt.

Ein Wicklungsstrang 27 ist aus drei Leiterbahnen 28, 28', 28" gebildet. Jede Leiterbahn 28, 28', 28" wird von einem Strom durchflossen. Die Leiterbahnen 28, 28', 28" sind mäanderförmig an der Außenseite 24 des Innenrings 20 angeordnet. Die Leiterbahnen 28, 28', 28" verlaufen also im Wesentlichen parallel zur Rotationsachse 33 des Felgenrings 30. Die Leiterbahnen 28, 28', 28" werden von einem Strom durchflossen, so dass durch die Wechselwirkung mit dem von den Magneteinrichtungen 34, 34', 34" erzeugten Magnetfeld eine Lorenzkraft erzeugt wird. Dabei sind die Leiterbahnen 28, 28', 28" so angeordnet, dass immer die Stromrichtung auf den gegenüberliegenden Magneteinrichtungen 34, 34', 34" abgestimmt ist. Bei der Drehung des Felgenringens 30 werden die Stromrichtungen der Leiterbahnen 28, 28', 28" dann durch eine Steuerung entsprechend geschaltet.

Dies gewährleistet, dass immer alle Leiterbahnen 28, 28', 28" zur Krafterzeugung beitragen. Die dargestellte Ausführungsform führt also zu einer sehr effizienten Nutzung der aufgebrachten Energie. Dies ist insbesondere bei elektrisch angetriebenen Fahrzeugen wünschenswert, da somit die Reichweite der Fahrzeuge erhöht wird.

Zwischen den Leiterbahnen 28, 28', 28" sind Isolationseinrichtungen 29 vorgesehen. Die Isolationseinrichtung 29 kann zum Beispiel ein Duroplast sein. Auch Thermoplaste sind denkbar. Die Nutzung von Duroplasten oder Thermoplasten hat den Vorteil, dass diese um den Innenring 20 herum gespritzt werden können. Dadurch werden einerseits die Leiterbahnen 28, 28', 28" an dem Innenring 20 gehalten und eine elektromagnetische Durchlässigkeit ist gewährleistet.

Die Figur 6 zeigt schematisch eine Leiterbahn 28, 28', 28". Die Leiterbahn 28, 28', 28" ist vorzugsweise flächig ausgebildet. Das bedeutet, dass die auf der Außenseite 24 des Innenrings 20 angebrachte Fläche groß ist. Also ist insbesondere die Breite B deutlich größer als die Höhe H der Leiterbahn 28, 28', 28". Eine solche Ausgestaltung der Leiterbahn 28, 28', 28" ermöglicht die einfache Produktion der Leiterbahn 28, 28', 28", da diese einfach aus einem Blech ausgestanzt oder per Laser ausgeschnitten werden können. Darüber hinaus ermöglicht solch eine Ausgestaltung, bei der die Höhe H 1/2, 1/5, 1/10, 1/15, 1/20 oder 1/50 der Breite B der Leiterbahnen 28, 28', 28" umfasst, eine kompakte Bauweise des Rades 10.

Zur Erhöhung des Fahrkomforts des Motorrollers 1, kann das Rad 10 über eine Federungseinrichtung 16 mit der Radaufhängung 15 verbunden sein. Die Federungseinrichtung 16 ist torsionselastisch ausgebildet. Über die Federungseinrichtung 16 kann die Dämpfung bzw. Federung des Rades 10 eingestellt werden.

### Bezugszeichenliste:

- 1: Motorroller
- 2: Lenkeinheit
- 3: Batteriekasten
- 10: Rad
- 11: Lagereinrichtung
- 13, 13': erstes Wälzlager, zweites Wälzlager
- 14, 14': Dichtung, Dichtungseinrichtung
- 15: Radaufhängung
- 16: Federungseinrichtung
- 17: Dichtungskörper
- 18: Dichtlippe
- 20: Innenring
- 21: Halterungsachse
- 22, 22': Außenkante des Innenrings
- 23: Innenseite des Innenrings
- 24: Außenseiten des Innenrings
- 25: Querrippen
- 26: Längsrippe
- 27: Wicklungsstrang
- 28, 28', 28": Leiterbahnen
- 29: Isolationseinrichtung
- 30: Felgenring
- 31: Außenseite des Felgenrings
- 32: Innenseite des Felgenrings
- 33: Rotationsachse, Rotationsachse des Felgenrings
- 34, 34', 34": Magneteinrichtung
- 35, 35': Stahlrücken
- 40: Bremseinrichtung
- 41: Bremsscheibe
- B: Breite einer Leiterbahn
- H: Höhe einer Leiterbahn
- FZ: Zentripetalkraft

## Patentansprüche

1. Rad (10) mit Antriebseinheit für ein Fahrzeug, insbesondere für einen Motorroller (1), einen Quad oder einen PKW, wobei das Rad (10) Folgendes aufweist:
- einen als Stator ausgebildeten Innenring (20), der mit einer Radaufhängung (15) des Rades (10) verbunden ist;
- einen als Rotor ausgebildeten Felgenring (30) mit einer Rotationsachse (33), wobei der Felgenring (30) außen um den Innenring (20) herumläuft und die Rotationsachse (33) und die Halterungsachse (23) zumindest im Wesentlichen parallel zueinander verlaufen,
wobei
die Radaufhängung (15) azentrisch von der Rotationsachse (33), beabstandet angeordnet ist und
an der Außenseite (24) des Innenrings (20) eine Vielzahl an Wicklungssträngen (27) angeordnet ist;
**dadurch gekennzeichnet, dass**
an der Innenseite (32) des Felgenrings (30) zu jedem Wicklungsstrang (27) gegenüberliegend jeweils eine Magneteinrichtung (34) angeordnet ist, wobei die Magneteinrichtungen (34) mit alternierender Polung angeordnet sind und die Wicklungsstränge (27) jeweils drei mäanderformig angeordnete Leiterbahnen (29) umfassen, wobei zwischen den Leiterbahnen (28) jeweils eine Isolationseinrichtung (29) angeordnet ist.

2. Rad (10) nach Anspruch 1,
**gekennzeichnet durch**
eine zur drehbaren Lagerung des Felgenrings (30) ausgebildete Lagereinrichtung (11), insbesondere ein Wälzlager (12) oder ein Magnetlager, wobei die Lagereinrichtung (11) am Innenring (20) und am Felgenring (30) angeordnet ist.

3. Rad (10) nach einem der vorhergehenden Ansprüche, insbesondere nach Anspruch 2,
**dadurch gekennzeichnet, dass**
die Lagereinrichtung (11) zumindest ein erstes und zweites Lager (13, 13'), insbesondere ein erstes und zweites Wälzlager, umfasst, wobei das erste und das zweite Lager (13, 13') sich gegenüberliegend wechselseitig an dem Innenring (20) und/oder an dem Felgenring (30) angeordnet sind.

4. Rad (10) nach einem der vorhergehenden Ansprüche, insbesondere nach Anspruch 2,
**dadurch gekennzeichnet, dass**
an der Lagereinrichtung (11) eine, insbesondere elektrisch betätigbare, Dichtungseinrichtung (14) vorgesehen ist.

5. Rad (10) nach einem der vorhergehenden Ansprüche, insbesondere nach Anspruch 4,
**dadurch gekennzeichnet, dass**
die Dichtungseinrichtung (14) dazu ausgebildet ist:
- die Lagereinrichtung (11) im Stillstand des Felgenrings (30) abzudichten; und
- die Lagereinrichtung (11) beim Umdrehen des Felgenrings (30), freizugeben.

6. Rad (10) nach einem der vorhergehenden Ansprüche, insbesondere nach Anspruch 5,
**dadurch gekennzeichnet, dass**
die Dichtungseinrichtung (14) dazu ausgebildet ist, die Lagereinrichtung (11) in Abhängigkeit von an dem Felgenring (30) wirkenden Zentripetalkräften (FZ) freizugeben.

7. Rad (10) nach einem der vorhergehenden Ansprüche, insbesondere nach Anspruch 5,
**dadurch gekennzeichnet, dass**
die Dichtungseinrichtung (14) dazu ausgebildet ist, die Lagereinrichtung (11) in Abhängigkeit von durch das Umdrehen des Felgenrings (30) erzeugten Luftdruckänderungen freizugeben.

8. Rad (10) nach einem der vorhergehenden Ansprüche, insbesondere nach Anspruch 5,
**dadurch gekennzeichnet, dass**
die Dichtungseinrichtung (14) dazu ausgebildet ist, die Lagereinrichtung (11) in Abhängigkeit von an der
Dichtungseinrichtung (14) wirkenden Magnetkräften freizugeben.

9. Rad (10) nach einem der vorhergehenden Ansprüche,
**dadurch gekennzeichnet, dass**
an der Innenseite (23) des Innenrings (20) eine Vielzahl von Querrippen (25) vorgesehen ist, die zumindest im Wesentlichen parallel zur Rotationsachse (33) angeordnet sind.

10. Rad (10) nach einem der vorhergehenden Ansprüche,
**dadurch gekennzeichnet, dass**
an der Innenseite (23) des Innenrings (20) zumindest eine Längsrippe (26) vorgesehen ist, die den Innenring (20) innen umläuft und zumindest im Wesentlichen senkrecht zur Rotationsachse (33) angeordnet ist.

11. Rad (10) nach einem der vorhergehenden Ansprüche,
**dadurch gekennzeichnet, dass**
die Leiterbahnen (28) auf der Außenseite (24) des Innenrings (20):
- aufgeklebt;
- flächig mit Folie aufgeklebt;
- thermoplastisch umspritzt; und/oder
- duroplastisch umspritzt
sind.

12. Rad (10) nach einem der vorhergehenden Ansprüche, insbesondere nach Anspruch 11,
**dadurch gekennzeichnet, dass**
die Leiterbahnen (28) flächig mit einer im Verhältnis zur Breite (B) geringeren Höhe (H) ausgebildet sind, insbesondere mit einer Höhe (H) von 1/2, 1/5, 1/10, 1/15, 1/20 oder 1/50 der Breite (B) der Leiterbahnen (28).

13. Rad (10) nach einem der vorhergehenden Ansprüche,
**dadurch gekennzeichnet, dass**
an der Radaufhängung (15) eine Bremseinrichtung (40) angeordnet ist, die dazu ausgebildet ist, bei einem Bremsvorgang von innen in eine mit dem Felgenring (30) fest verbundene Bremsscheibe (41) einzugreifen.

14. Rad (10) nach einem der vorhergehenden Ansprüche,
**dadurch gekennzeichnet, dass**
die Radaufhängung (15) eine Federungseinrichtung (16) aufweiset, und wobei die Radaufhängung (15) derart ausgestaltet ist, dass eine Rotation um eine Halterungsachse (23) stattfindet.

15. Verfahren zur Montage eines Rades (10) mit einem Antrieb nach einem der vorhergehenden Ansprüche, Folgendes aufweisend:
- Anfertigen von Leiterbahnen (28) aus einem Blech;
- Anbringen, insbesondere Aufkleben, der Leiterbahnen (28) an der Außenseite (24) des Innenrings (20) des Rades (10);
- Isolieren der Leiterbahnen (28).

16. Verfahren nach Anspruch 15,
**dadurch gekennzeichnet, dass**
das Anfertigen der Leiterbahnen (28)
- ein Ausstanzen der Leiterbahnen (28) aus einem Blech; oder
- das Ausschneiden, insbesondere per Laser, aus einem Blech umfasst.

17. Verfahren nach einem der Ansprüche 15 bis 16,
**dadurch gekennzeichnet, dass**
das Isolieren der Leiterbahnen (28)
- ein thermoplastisches Umspritzen; oder
- ein duroplastisches Umspritzen der Leiterbahnen (28) umfasst.

## Claims

1. Wheel (10) with a drive unit for a vehicle, in particular for a motor scooter (1), a quad bike or a passenger car, wherein the wheel (10) comprises
- an inner ring (20) designed as a stator, which is connected to a wheel suspension (15) of the wheel (10);
- a rim ring (30) designed as a rotor and having an axis of rotation (33), wherein the rim ring (30) rotates around the outside of the inner ring (20) and the axis of rotation (33) and the holder axis (23) extend at least substantially parallel to one another,
wherein
the wheel suspension (15) is arranged eccentrically at a distance from the axis of rotation (33), and
a plurality of winding strands (27) is arranged on the outside (24) of the inner ring (20);
**characterized in that**
on the inner side (32) of the rim ring (30), opposite each winding strand (27), one magnet device (34) each is arranged, wherein the magnet devices (34) are arranged with alternating polarity and the winding strands (27) each comprise three conductor tracks (29) arranged in meandering form, wherein an insulation device (29) is respectively arranged between the conductor tracks (28).

2. Wheel (10) according to claim 1, **characterized by** a bearing device (11) designed for rotatably supporting the rim ring (30), in particular a roller bearing (12) or a magnetic bearing, wherein the bearing device (11) is arranged on the inner ring (20) and on the rim ring (30).

3. Wheel (10) according to one of the preceding claims, in particular according to claim 2, **characterized in that** the bearing device (11) comprises at least a first and a second bearing (13, 13'), in particular a first and a second rolling bearing, wherein the first and the second bearing (13, 13') are arranged opposite each other alternately on the inner ring (20) and/or on the rim ring (30).

4. Wheel (10) according to one of the preceding claims, in particular according to claim 2, **characterized in that** a sealing device (14), in particular an electrically operable one, is provided on the bearing device (11).

5. Wheel (10) according to one of the preceding claims, in particular according to claim 4, **characterized in that** the sealing device (14) is designed for the purpose of
- sealing the bearing device (11) in the case of a standstill of the rim ring (30); and
- releasing the bearing device (11) when the rim ring (30) is rotated.

6. Wheel (10) according to one of the preceding claims, in particular according to claim 5, **characterized in that** the sealing device (14) is designed to release the bearing device (11) in response to centripetal forces (FZ) acting on the rim ring (30).

7. Wheel (10) according to one of the preceding claims, in particular according to claim 5, **characterized in that** the sealing device (14) is designed to release the bearing device (11) in response to changes in air pressure generated by the rotation of the rim ring (30).

8. Wheel (10) according to one of the preceding claims, in particular according to claim 5, **characterized in that** the sealing device (14) is designed to release the bearing device (11) in response to magnetic forces acting on the sealing device (14).

9. Wheel (10) according to one of the preceding claims, **characterized in that** a plurality of transverse ribs (25) is provided on the inner side (23) of the inner ring (20), which are arranged at least substantially parallel to the axis of rotation (33).

10. Wheel (10) according to one of the preceding claims, **characterized in that** on the inner side (23) of the inner ring (20) at least one longitudinal rib (26) is provided, which encircles the inner ring (20) internally and is arranged at least substantially perpendicularly to the axis of rotation (33).

11. Wheel (10) according to one of the preceding claims, **characterized in that** the conductor tracks (28) located on the outer side (24) of the inner ring (20) are
- glued on;
- glued on flat with foil;
- extrusion-coated in a thermoplastic manner; and/or
- extrusion-coated in a duroplastic manner.

12. Wheel (10) according to one of the preceding claims, in particular according to claim 11, **characterized in that** the conductor tracks (28) are designed flat with a height (H) which is smaller in relation to the width (B), in particular with a height (H) of 1/2, 1/5, 1/10, 1/15, 1/20 or 1/50 of the width (B) of the conductor tracks (28).

13. Wheel (10) according to one of the preceding claims, **characterized in that** a brake device (40) is arranged on the wheel suspension (15), which is designed to engage during a braking operation from the inside in a brake disc (41) which is firmly connected to the rim ring (30).

14. Wheel (10) according to one of the preceding claims, **characterized in that** the wheel suspension (15) comprises a suspension device (16), and wherein the wheel suspension (15) is configured such that rotation about a holder axis (23) takes place.

15. Method for assembling a wheel (10) having a drive according to one of the preceding claims, comprising:
- production of conductor tracks (28) from a sheet metal;
- attaching, in particular gluing, the conductor tracks (28) to the outside (24) of the inner ring (20) of the wheel (10);
- insulating the conductor tracks (28).

16. Method according to claim 15, **characterized in that** the production of the conductor tracks (28) comprises
- a punching out of the conductor tracks (28) from a sheet metal; or
- the cutting out, in particular by laser, from a sheet metal.

17. Method according to one of claims 15 to 16, **characterized in that** the insulation of the conductor tracks (28) comprises
- a thermoplastic extrusion-coating; or
- a duroplastic extrusion-coating
of the conductor tracks (28).

## Revendications

1. Roue (10) munie d'une unité d'entraînement pour un véhicule, en particulier pour un scooter (1), un quad ou une voiture de tourisme, sachant que la roue (10) présente ce qui suit :
- une bague intérieure (20) constituée comme stator, qui est reliée à une suspension de roue (15) de la roue (10) ;
- une bague de jante (30) constituée comme rotor avec un axe de rotation (33), sachant que la bague de jante (30) entoure extérieurement la bague intérieure (20), et l'axe de rotation (33) et l'axe de fixation (23) s'étendent de manière au moins sensiblement parallèle l'un à l'autre,
sachant que
la suspension de roue (15) est agencée de manière espacée, acentriquement par rapport à l'axe de rotation (33) et
une pluralité de faisceaux d'enroulement (27) est disposée du côté extérieur (24) de la bague intérieure (20) ;
**caractérisée en ce que**
à l'opposé de chaque faisceau d'enroulement (27), respectivement un dispositif magnétiques (34) est disposé du côté intérieur (32) de la bague de jante (30), sachant que les dispositifs magnétiques (34) sont disposés avec une polarisation alternante et les faisceaux d'enroulement (27) comprennent respectivement trois pistes de conducteurs (29) disposées en forme de méandres, sachant que respectivement un dispositif d'isolation (29) est disposé entre les pistes de conducteurs (28).

2. Roue (10) selon la revendication 1,
**caractérisée par**
un dispositif de palier (11) constitué pour le logement rotatif de la bague de jante (30), en particulier un palier lisse (12) ou un palier magnétique, sachant que le dispositif de palier (11) est disposé sur la bague intérieure (20) et sur la bague de jante (30).

3. Roue (10) selon l'une des revendications précédentes, en particulier selon la revendication 2,
**caractérisée en ce que**
le dispositif de palier (11) comprend au moins un premier et un deuxième palier (13, 13'), en particulier un premier et un deuxième palier lisse, sachant que le premier et le deuxième palier (13, 13') sont disposés de manière opposée en alternance sur la bague intérieure (20) et/ou sur la bague de jante (30).

4. Roue (10) selon l'une des revendications précédentes, en particulier selon la revendication 2,
**caractérisée en ce que**
un dispositif d'étanchéité (14), en particulier actionnable électriquement, est prévu au niveau du dispositif de palier (11).

5. Roue (10) selon l'une des revendications précédentes, en particulier selon la revendication 4,
**caractérisée en ce que**
le dispositif d'étanchéité (14) est constitué pour :
- étanchéifier le dispositif de palier (11) à l'arrêt de la bague de jante (30) ; et
- libérer le dispositif de palier (11) lors de la rotation de la bague de jante (30).

6. Roue (10) selon l'une des revendications précédentes, en particulier selon la revendication 5,
**caractérisée en ce que**
le dispositif d'étanchéité (14) est constitué pour libérer le dispositif de palier (11) en fonction de forces centripètes (FZ) qui agissent sur la bague de jante (30).

7. Roue (10) selon l'une des revendications précédentes, en particulier selon la revendication 5,
**caractérisée en ce que**
le dispositif d'étanchéité (14) est constitué pour libérer le dispositif de palier (11) en fonction de changements de pression d'air générés par la rotation de la bague de jante (30).

8. Roue (10) selon l'une des revendications précédentes, en particulier selon la revendication 5,
**caractérisée en ce que**
le dispositif d'étanchéité (14) est constitué pour libérer le dispositif de palier (11) en fonction de forces magnétiques qui agissent sur le dispositif d'étanchéité (14).

9. Roue (10) selon l'une des revendications précédentes,
**caractérisée en ce que**
une pluralité de nervures transversales (25) qui sont disposées de manière au moins sensiblement parallèle à l'axe de rotation (33) est prévue du côté intérieur (23) de la bague intérieure (20).

10. Roue (10) selon l'une des revendications précédentes,
**caractérisée en ce que**
au moins une nervure longitudinale (26) qui entoure intérieurement la bague intérieure (20) et qui est disposée de manière au moins sensiblement perpendiculaire à l'axe de rotation (33) est prévue du côté intérieur (23) de la bague intérieure (20).

11. Roue (10) selon l'une des revendications précédentes,
**caractérisée en ce que**
les pistes de conducteurs (28) sont :
- collées ;
- collées de manière surfacique avec un film ;
- surmoulées thermoplastiquement ; et/ou
- surmoulées duroplastiquement
sur le côté extérieur (24) de la bague intérieure (20).

12. Roue (10) selon l'une des revendications précédentes, en particulier selon la revendication 11,
**caractérisée en ce que**
les pistes de conducteurs (28) sont constituées de manière surfacique avec une hauteur (H) moindre par rapport à la largeur (B), en particulier avec une hauteur (H) de 1/2, 1/5, 1/10, 1/15, 1/20 ou 1/50 de la largeur (B) des pistes conducteurs (28).

13. Roue (10) selon l'une des revendications précédentes,
**caractérisée en ce que**
un dispositif de frein (40) qui est constitué pour se mettre en prise de l'intérieur dans un disque de frein (41) relié solidairement à la bague de jante (30) lors d'une opération de freinage est disposé au niveau de la suspension de roue (15).

14. Roue (10) selon l'une des revendications précédentes,
**caractérisée en ce que**
la suspension de roue (15) présente un dispositif d'amortissement (16), et sachant que la suspension de roue (15) est configurée de telle manière qu'une rotation autour d'un axe de fixation (23) ait lieu.

15. Procédé de montage d'une roue (10) munie d'un entraînement selon l'une des revendications précédentes, présentant ce qui suit :
- fabrication de pistes de conducteurs (28) à partir d'une tôle ;
- pose, en particulier collage, des pistes de conducteurs (28) sur le côté extérieur (24) de la bague intérieure (20) de la roue (10) ;
- isolation des pistes de conducteurs (28).

16. Procédé selon la revendication 15,
**caractérisé en ce que**
la fabrication des pistes de conducteurs (28) comprend
- un estampage des pistes de conducteurs (28) à partir d'une tôle ; ou
- le découpage, en particulier par laser, à partir d'une tôle.

17. Procédé selon l'une des revendications 15 à 16,
**caractérisé en ce que**
l'isolation des pistes de conducteurs (28) comprend
- un surmoulage thermoplastique ; ou
- un surmoulage duroplastique.
